# EUROPÄISCHE PATENTSCHRIFT

(11) **EP 3 371 019 B1**
(45) Veröffentlichungstag und Bekanntmachung des Hinweises auf die Patenterteilung: **04.09.2019**
(21) Anmeldenummer: 16791372.2
(22) Anmeldetag: 02.11.2016
(51) Int. Cl.: B60T 11/34, B60T 15/50

(54) **DRUCKBEGRENZUNGSVENTIL**
PRESSURE-LIMITING VALVE
SOUPAPE DE LIMITATION DE PRESSION

(30) Priorität: 05.11.2015 DE 102015118962
(43) Veröffentlichungstag der Anmeldung: 12.09.2018
(73) Patentinhaber: KNORR-BREMSE Systeme für Nutzfahrzeuge GmbH, 80809 München (DE)
(72) Erfinder: AYDEMIR, Isa, 81249 München (DE)
(86) Internationale Anmeldenummer: PCT/EP2016/076407
(87) Internationale Veröffentlichungsnummer: WO 2017/076890

(56) Entgegenhaltungen:
- DE-A1- 2 619 769
- DE-B3-102007 054 760
- DE-C1- 3 311 816

## Beschreibung

Die vorliegende Erfindung betrifft ein Druckbegrenzungsventil mit einem Ventilgehäuse, einem Ventilkolben mit einer Druckbegrenzungsfeder, wobei das Druckbegrenzungsventil insbesondere ein Druckbegrenzungsventil eines Luftaufbereitungssystems für ein Bremssystem für ein Nutzfahrzeug ist.

Im Zusammenhang mit Nutzfahrzeugen sind Luftaufbereitungssysteme für pneumatische Bremssysteme bekannt, bei denen ein Sicherheitsventil für einen druckgeminderten Kreis für einen Druckbegrenzer integriert ist.

Die Luftaufbereitung ist eine zentrale Komponente in einem pneumatischen Bremssystem eines Nutzfahrzeugs, in der die vom Kompressor geförderte öl- und wasserhaltige Luft gefiltert und gereinigt wird. Die komprimierte Luft wird mit dem benötigten Druck und in der richtigen Befüllreihenfolge den verschiedenen Bremskreisen und Luftverbrauchern im Nutzfahrzeug zugeteilt. Im Defektfall werden die einzelnen Bremskreise gegeneinander abgesichert, so dass zur Abbremsung des Nutzfahrzeugs (beispielsweise eines Lastkraftwagens) eine ausreichende Hilfsbremswirkung zur Verfügung steht. Eine elektronische Luftaufbereitung beinhaltet neben einer Steuerelektronik Sensoren und Aktuatoren. Neueste Luftaufbereitungsgeräte beinhalten zusätzlich noch eine elektronische Parkbremse (EPB).

Manche dieser Bremskreise arbeiten dabei auf einem niedrigeren Druckniveau, welches unter dem Druckniveau der anderen Bremskreise liegt.

Mit einem Druckbegrenzungsventil kann dabei der Druck auf das gewünschte niedrige Niveau reduziert werden. Indem die Kraft der Feder des Druckbegrenzers mit einer Einstellschraube justiert wird, kann das gewünschte Druckniveau eingestellt werden.

Bei derartigen Druckbegrenzungsventilen sind dabei unterschiedliche Bauformen bekannt. Aus dem Stand der Technik sind insbesondere Druckbegrenzungsventile nach dem Prinzip "Zuschieben" bekannt, bei denen bei einer Drucksteigerung im System der Druckbegrenzer bei dem definierten Schließdruck schließt und so den auslassseitigen Druck begrenzt. Bei einer weiteren Drucksteigerung auf der Einlass-Seite des Druckbegrenzers wird über eine Wirkfläche am Ventil dieser zugeschoben und die Dichtkraft am Ventilsitz erhöht sich. Ein derartiges Druckbegrenzungsventil ist beispielsweise aus der DE 10 2010 947 491 A1 bekannt.

Weitere Druckbegrenzungsventile sind aus der DE 33 11 816 C1, der DE 26 20 135 A1, der DE 41 14 977 A1, der DE 30 26 283 A1, der DE 26 19 769 A1, der DE 26 19 769 A1, der DE 600 24 496 D2 sowie der DE 20 2006 017 517 U1 bekannt, wobei diese Ventile ebenfalls nach dem Prinzip "Zuschieben" arbeiten.

Ein weiteres Prinzip für Druckbegrenzungsventile ist das Prinzip "Zuziehen", wobei bei einer Drucksteigerung im System der Druckbegrenzer bei dem definierten Schließdruck schließt und so den auslassseitigen Druck begrenzt. Bei einer weiteren Drucksteigerung auf der Einlass-Seite des Druckbegrenzers wird über eine Wirkfläche am Kolben eine Kraft erzeugt, die als Zugkraft über den Kolben in den Ventilsitz eingeleitet wird. Die Dichtkraft am Ventilsitz erhöht sich hierdurch.

Aus der DE 43 44 416 A1 ist eine Druckbegrenzungseinrichtung bekannt, die nach dem Prinzip "Zuziehen" arbeitet. Dieses Druckbegrenzungsventil weist jedoch keine Sicherheitsventilfunktion auf.

Des Weiteren ist zu beachten, dass die Reibung in einem Druckbegrenzungsventil so gering wie möglich sein sollte, um die Hysterese des Druckbegrenzungsventils so gering wie möglich zu halten. Aus diesem Grund werden bei den Druckbegrenzungsventilen Dichtmittel eingesetzt, die entweder aufvulkanisiert werden oder eine aufgezogene Formdichtung enthalten. Um die Betriebskreise abzusichern, werden zusätzliche Sicherheitsventile verbaut. Diese halten den Druck in den Betriebskreisen so lange aufrecht, bis das Nutzfahrzeug (z.B. ein LKW) anhalten kann.

Die Sicherheitsventile benötigen mehr Bauraum, so dass mehr Material für den Ventilblock und mehr Teile für die Montage notwendig sind.

Es ist die Aufgabe der vorliegenden Erfindung, ein Druckbegrenzungsventil der eingangs genannten Art in vorteilhafter Weise weiterzubilden, insbesondere dahingehend, dass es weniger Bauraum benötigt und darüber hinaus mit geringeren Kosten zu fertigen ist.

Diese Aufgabe wird erfindungsgemäß gelöst durch ein Druckbegrenzungsventil mit den Merkmalen des Anspruchs 1. Danach ist vorgesehen, dass ein Druckbegrenzungsventil ein Ventilgehäuse, einen Ventilkolben und eine Druckbegrenzungseinstellfeder aufweist, wobei im Ventilgehäuse wenigstens ein Ventileinlass und wenigstens ein Ventilauslass vorgesehen ist, wobei der Ventilkolben eine Öffnungsstellung, bei der der Ventileinlass und der Ventilauslass miteinander verbunden sind, und wenigstens eine Schließstellung, bei der der Ventileinlass und der Ventilauslass voneinander getrennt sind, einnehmen kann, wobei der Ventilkolben einen ersten Kolbenring mit einer Dichtfläche und einen zweiten Kolbenring aufweist, wobei der erste Kolbenring eine geringere pneumatische Wirkfläche aufweist als der zweite Kolbenring und wobei der Ventilkolben zwischen dem ersten Kolbenring und dem zweiten Kolbenring einen im Wesentlichen kegelstumpfartigen Abschnitt aufweist, der sich zum ersten Kolbenring hin verjüngt, wobei in der Schließstellung die Dichtfläche des ersten Kolbenrings gegen einen Gehäuseansatz dichtend zugezogen ist durch eine pneumatische Kraft, die auf den ersten Kolbenring und auf den zweiten Kolbenring wirkt und die entgegen der Kraft der Druckbegrenzungseinstellfeder gerichtet ist, und wobei weiter im Ventilkolben ein pneumatischer Durchgang zur Ausbildung einer Sicherheitsventilfunktion vorhanden ist, der durch einen federbelasteten Sicherheitsventilkörper verschließbar ist.

Die Erfindung basiert auf dem Grundgedanken, dass in das Druckbegrenzungsventil selbst ein Sicherheitsventil integriert wird, so dass eine integrierte Sicherheitsventilfunktion durch das Druckbegrenzungsventil ermöglicht ist. Darüber hinaus wird ein Druckbegrenzungsventil nach dem Prinzip "Zuziehen" gewählt, da dieses bei Übersteigen des Grenzdruckes, bei dem das Druckbegrenzungsventil schließen soll, den Ventilkolben zuzieht und zugleich selbstverstärkend wirkt. Wird dann weiter ein sicherheitskritischer Druck überschritten, der ebenfalls vorgegeben werden kann, so kann mittels der Sicherheitsventilfunktion dieser Druck, der die Sicherheitsventilfunktion auslöst, abgebaut werden. Durch die Integration der Sicherheitsventilfunktion in das Druckbegrenzungsventil selbst wird der Bauraum des Druckbegrenzungsventils mitbenutzt, so dass kein gesonderter Bauraum für das Sicherheitsventil notwendig ist. Darüber hinaus werden auch weniger Teile benötigt, da durch die Integration des Sicherheitsventils in das Druckbegrenzungsventil beispielsweise kein gesondertes Gehäuse mehr für das Sicherheitsventil notwendig ist.

Des Weiteren kann vorgesehen sein, dass die Druckbegrenzungseinstellfeder auf der dem ersten Kolbenring abgewandten Seite des zweiten Kolbenrings liegenden zweiten Kolbenring angestellt ist. Dadurch wird eine besonders günstige Krafteinleitung der durch die Druckbegrenzungseinstellfeder erzeugten Federkraft in den Ventilkolben erreicht. Des Weiteren kann der ohnehin durch den zweiten Kolbenring ausgebildete Ansatz vorteilhaft genutzt werden, um die Druckbegrenzungseinstellfeder auf den Ventilkolben aufzusetzen. Der Körper des Ventilkolbens bildet in diesem Zusammenhang vorteilhafterweise eine gewisse Führung für die Druckbegrenzungseinstellfeder.

Darüber hinaus kann vorgesehen sein, dass lediglich ein Teil der Radialfläche des ersten Kolbenrings im Ventilgehäuse geführt ist. Dadurch kann die Reibung des ersten Kolbenrings im Ventilgehäuse vermindert werden. Des Weiteren ist es möglich, dass die zwischen dem ersten Kolbenring und dem Ventilgehäuse abzudichtende Öffnung zum Ventilauslass hin sich in der Schließposition lediglich auf den Spalt zwischen dem ersten Kolbenring und dem Ventilgehäuse beschränkt.

Ferner kann vorgesehen sein, dass die Dichtfläche des ersten Kolbenrings in der Radialfläche des ersten Kolbenrings angeordnet ist. Hierdurch wird eine einfache und zuverlässige Dichtung ermöglicht. Gleichzeitig wird hierdurch erreicht, dass die Kraft, die notwendig ist, um den ersten Kolbenring vom Ventilgehäuse abzuheben, vergleichsweise gering ist. Denkbar ist beispielsweise auch, dass in der Schließposition die Dichtfläche des ersten Kolbenrings auf einer außenliegenden Fläche des Ventilgehäuses aufliegt.

Außerdem kann vorgesehen sein, dass die Dichtfläche des ersten Kolbenrings durch einen O-Ring und/oder durch ein aufvulkanisiertes Dichtelement ausgebildet ist. Hierdurch wird eine einfache und zuverlässige Dichtmöglichkeit erreicht. Im Einzelnen weisen O-Ringe den Vorteil auf, dass diese einfach ausgetauscht werden können. Aufvulkanisierte Dichtelemente hingegen weisen den Vorteil auf, dass diese kostengünstig und einfach angebracht werden können. Beide Varianten sind jedoch insgesamt vergleichsweise einfach und kostengüntig zu realisieren.

Des Weiteren kann vorgesehen sein, dass der zweite Kolbenring eine Radialfläche aufweist, die im Ventilgehäuse geführt ist, wobei in der Radialfläche ein Dichtring vorgesehen ist. Hierdurch wird es möglich, den an den Einlass und Auslass des Druckbegrenzungsventils angeschlossenen Ringraum im Inneren des Ventilgehäuses nach außen hin einfach abdichten zu können.

Der Dichtring kann durch ein O-Ring und/oder durch ein aufvulkanisiertes Dichtelement ausgebildet sein.

Darüber hinaus kann vorgesehen sein, dass der Sicherheitsventilkörper durch die Druckbegrenzungseinstellfeder federbelastet ist. Hierdurch wird es möglich, eine gesonderte Feder für den Sicherheitsventilkörper zur Ausbildung der Sicherheitsventilsfunktion entfallen lassen zu können. Mittels der Druckbegrenzungseinstellfeder kann der Druck eingestellt werden, ab dem der Sicherheitsventilkörper öffnet, um die Sicherheitsventilfunktion zu ermöglichen.

Insbesondere kann vorgesehen sein, dass der Sicherheitsventilkörper in einer geschlossenen Stellung dichtend am Dichtring des zweiten Kolbenrings anliegt. Diese Ausführungsform weist den Vorteil auf, dass sie besonders klein bauend ist, da der Sicherheitsventilkörper direkt am zweiten Kolbenring anliegt bzw. in unmittelbarer räumlicher Nähe zum zweiten Kolbenring angeordnet ist.

Der Sicherheitsventilkörper kann im Ventilgehäuse geführt sein. Hierdurch wird es möglich, einfach und zuverlässig bei gleichzeitig geringem Bauraumbedarf eine definierte Relativbewegung des Sicherheitsventilkörpers im Ventilgehäuse zu definieren.

Der Sicherheitsventilkörper kann im Inneren des Ventilkolbens angeordnet sein. Hierdurch wird es weiter möglich, den notwendigen Bauraum für das Druckbegrenzungsventil zu reduzieren.

Außerdem kann vorgesehen sein, dass der Sicherheitsventilkörper einen Sicherheitsventilkörperdichtring aufweist, mittels dessen der pneumatische Durchgang in einer geschlossenen Stellung des Sicherheitsventilkörpers dichtend verschließbar ist.

Darüber hinaus ist möglich, dass der Sicherheitsventilkörper eine gesonderte Sicherheitsventilkörperfeder aufweist, die den Sicherheitsventilkörper in einer offenen Stellung des Sicherheitsventilkörpers gegen den pneumatischen Durchgang anstellt.

Weitere Einzelheiten und Vorteile der Erfindung sollen nun anhand von in den Zeichnungen dargestellten Ausführungsformen näher dargestellt werden.

Es zeigen :
- Fig. 1: eine schematische Schnittzeichnung eines erfindungsgemäßen Ausführungsbeispiels eines Druckbegrenzungsventils in einer ersten Ausführungsform;
- Fig. 2: eine schematische Schnittzeichnung eines erfindungsgemäßen Ausführungsbeispiels eines Druckbegrenzungsventils in einer zweiten Ausführungsform; und
- Fig. 3: eine schematische Schnittzeichnung eines erfindungsgemäßen Ausführungsbeispiels eines Druckbegrenzungsventils in einer dritten Ausführungsform;

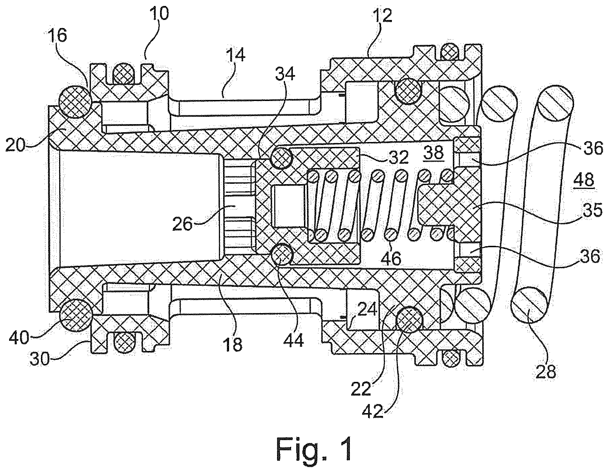

**Fig. 1** zeigt in einer Schnittdarstellung ein erstes Ausführungsbeispiel eines erfindungsgemäßen Druckbegrenzungsventils 10.

Das Druckbegrenzungsventil 10 ist ein Druckbegrenzungsventil 10 nach dem Prinzip "Zuziehen".

Das Druckbegrenzungsventil 10 weist ein Ventilgehäuse 12 mit einem radial angeordneten Ventileinlass 14, einem Ventilauslass 16 und einem Ventilkolben 18 auf.

Der Ventilauslass 16 ist axial angeordnet und in der gezeigten Schließstellung des Druckbegrenzungsventils 10 durch einen Teil des Ventilkolbens 18, nämlich durch den ersten Kolbenring 20 verschlossen.

Der Ventilkolben 18 weist neben dem ersten Kolbenring 20 einen zweiten Kolbenring 22 auf.

Der zweite Kolbenring 22 weist mit einer seiner Axialflächen, nämlich der Axialfläche, die dem ersten Kolbenring 20 zugewandt ist, eine pneumatisch wirksame Fläche auf. Diese Axialfläche wiederum ist in der geöffneten Stellung des Druckbegrenzungsventils 10 auch dafür vorgesehen, gegen den Gehäuseansatz 24 zu fahren, wodurch die maximale Öffnung des Ventilauslasses 16 definiert ist.

Im Ventilkolben 18 ist ein pneumatischer Durchgang 26 vorgesehen, der durch als zentral angeordnete Durchgangsbohrung ausgebildet ist.

Auf den Ventilkolben 18 wirkt die Federkraft einer Druckbegrenzungseinstellfeder 28, deren oberes Ende gegen den zweiten Kolbenring 22 angestellt ist.

Die Druckbegrenzungseinstellfeder 28 ist damit auf der dem ersten Kolbenring 20 abgewandten Seite des zweiten Kolbenrings 22 gegen den zweiten Kolbenring 22 angestellt.

Das Ventilgehäuse 12 weist einen außenliegenden Anschlag 30 auf, der durch eine außenliegende Gehäusefläche ausgebildet ist und deren innere Kante den Ventilauslass 16 mitbegrenzt.

Im Inneren des Ventilkolbens 18 ist in einer Ausnehmung 38 ein Sicherheitsventilkörper 32 geführt, mittels dessen der pneumatische Durchgang 26 verschließbar ist.

Der Ventilkörper 18 weist in dieser Ausnehmung 38 auch eine Führung 34 auf, in die ein Teil des Sicherheitsventilkörpers 32 eingreifen kann. In dem in Fig. 1 gezeigten Ausführungsbeispiel und in der gezeigten Stellung greift der Sicherheitsventilkörper 32 in die Führung 34 ein bzw. ist in dieser geführt.

Der Sicherheitsventilkörper kann ein Drehteil aus Kunststoff sein.

An dem der Druckbegrenzungseinstellfeder 28 zugewandten Ende des Ventilkolbens 18 ist die Ausnehmung 38 mittels eines Stopfens 35 verschlossen. Dieser Stopfen 35 weist Durchlässe 36 auf, die zum Durchtritt von Druckluft im Zusammenhang mit der Sicherheitsventilfunktion dienen.

In der Radialfläche des ersten Kolbenringes 20 ist eine Dichtfläche 40 des ersten Kolbenringes 20 angeordnet. Die Dichtfläche 40 des ersten Kolbenringes 20 kann durch einen O-Ring (wie gezeigt) oder durch ein aufvulkanisiertes Dichtelement ausgebildet sein.

Der zweite Kolbenring 22 weist eine Radialfläche auf, die im Ventilgehäuse 12 geführt ist. In dieser Radialfläche des zweiten Kolbenrings 22 ist ein Dichtring 42 vorgesehen.

Der Dichtring 42 kann wie in Fig. 1 gezeigt durch durch einen O-Ring oder durch ein aufvulkanisiertes Dichtelement ausgebildet sein.

In der in Fig. 1 gezeigten Stellung ist der Ventilauslass 16 dicht geschlossen, und zwar durch den ersten Kolbenring 20 und dessen Dichtfläche 40.

Lediglich ein Teil der Radialfläche des ersten Kolbenrings 20 ist im Ventilgehäuse 12 geführt, nämlich der Teil der Radialfläche des ersten Kolbenrings 20, die dem Ventilgehäuse zugewandt ist. In der Schließstellung fährt die Dichtfläche 40 gegen Anschlag 30.

Die Dichtfläche 40 mit rundem oder z.B. alternativ ovalem Querschnitt, entweder durch einen O-Ring oder durch ein aufvulkanisiertes Dichtelement ausgebildet, wird derart gegen den Anschlag 30 gezogen, dass der zwischen Ventilgehäuse 12 und dem ersten Kolbenring 20 befindliche Spalt sicher dicht verschlossen wird.

Dies wird zusätzlich noch durch die elastische Verformung der Dichtfläche 40 unterstützt.

Auch die Formgebung der Dichtfläche 40 mit dem runden oder ovalen Querschnitt unterstützt ein sauberes Anlegen der Dichtfläche 40 an den Anschlag 30.

Der zwischen dem ersten Kolbenring 20 und dem zweiten Kolbenring 22 ausgebildete Ringraum ist zur Druckbegrenzungseinstellfeder 28 hin mittels des Dichtrings 42 abgedichtet.

Ferner weist der Sicherheitsventilkörper 32 eine Sicherheitsventilkörperdichtfläche 44 auf, die zusammen mit dem Sicherheitsventilkörper 32 den pneumatischen Durchgang 26 in der Schließstellung dicht abschließt. Der Sicherheitsventilkörper 32 weist somit einen Sicherheitsventilkörperdichtring auf, mittels dessen der pneumatische Durchgang 26 in der gezeigten geschlossenen Stellung dichtend verschließbar bzw. hier verschlossen ist.

Der Sicherheitsventilkörper 32 ist mittels einer Feder 46 federbelastet, wobei die Feder 46 mit ihrem einen Ende durch den Stopfen 35 und mit ihrem anderen Ende durch eine Ausnehmung 38 im Sicherheitsventilkörper 32 geführt ist.

Die Feder 46 ist eine gesonderte Sicherheitsventilkörperfeder 33, die den Sicherheitsventilkörper 32 in einer geschlossenen Stellung des Sicherheitsventilkörpers 32 gegen den pneumatischen Durchgang 26 anstellt.

Der Ventilkolben 18 ist zwischen dem ersten Kolbenring 20 und dem zweiten Kolbenring 22 kegelstumpfartig ausgebildet, d.h. er weist hier einen im Wesentlichen kegelstumpfartigen Abschnitt auf.

Dieser kegelstumpfartige Abschnitt verjüngt sich vom zweiten Kolbenring 22 beginnend hin zum ersten Kolbenring 20.

Durch diese Durchmesservergrößerung erhält der erste Kolbenring 20 eine geringere pneumatische Wirkfläche als der zweite Kolbenring 22.

Die Durchlässe 36 sind mit einem nicht näher gezeigten Sicherheitsventilauslass 48, der im Bereich der Druckbegrenzungseinstellfeder 28 sich befindet, verbunden.

Die Funktion des Druckbegrenzungsventils 10 lässt sich wie folgt beschreiben:
Im geöffneten Zustand des Druckbegrenzungsventils 10 (nicht gezeigt) strömt beispielsweise Druckluft über den Ventileinlass 14 ein. Die am ersten Kolbenring 20 eingreifende Kraft sowie die Federkraft der Druckbegrenzungseinstellfeder 28 sorgen dafür, dass der Ventilkolben 18 mit dem zweiten Kolbenring 22 gegen den Gehäuseansatz 24 geschoben ist und hierdurch der Ventileinlass 14 mit dem Ventilauslass 16 verbunden ist.

Überschreitet die über den Ventileinlass 14 einströmende Druckluft einen gewissen voreinstellbaren Grenzdruck, der mittels der Druckbegrenzungseinstellfeder 28 und beispielsweise eines bekannten Einstellelements wie einer Einstellschraube (nicht näher dargestellt) einstellbar ist, so führt dies dazu, dass die resultierende Kraft, die sich aus den an den pneumatisch wirksamen Flächen des ersten Kolbenrings 20 und des zweiten Kolbenrings 22 sowie der Feder der Druckbegrenzungseinstellfeder 28 ergibt, den Ventilkolben 18 gegen die Richtung der Federkraft der Druckbegrenzungseinstellfeder 28 entgegen der pneumatischen Kraft, die durch das Angreifen der Druckluft auf der pneumatisch wirksamen Fläche des ersten Kolbenrings 20 wirkt, schiebt. Dadurch wird die Dichtfläche 40 des ersten Kolbenrings 20 gegen den Anschlag 30 dichtend geschoben und hierdurch der Ventilauslass 16 geschlossen. Dadurch wird der Druck jenseits des Ventilauslasses auf den Grenzdruck begrenzt, auf den das Druckbegrenzungsventil 10 eingestellt ist.

Übersteigt nun beispielsweise in einem Fehlerfall ventilauslassseitig der Druck einen vorgegebenen Sicherheitsdruck, so kommt die Sicherheitsfunktion des Druckbegrenzungsventils 10 zum Tragen. In diesem Fall schiebt der anliegende pneumatische Druck den mittels der Feder 46 federbelasteten Sicherheitsventilkörper 32 auf und öffnet hierdurch den pneumatischen Durchgang 26. Über die Durchlässe 36 kann die Druckluft über den Sicherheitsventilauslass 48 entweichen.

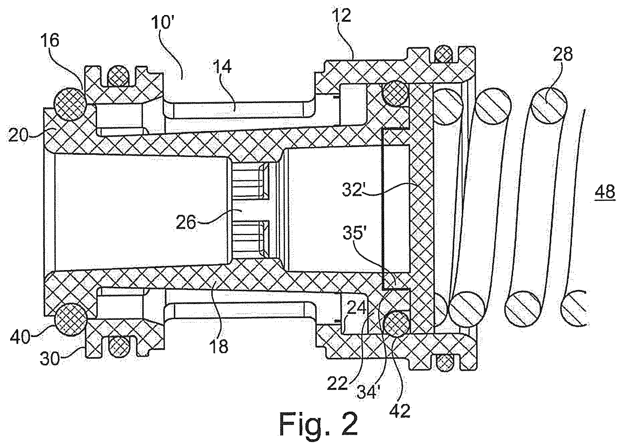

**Fig. 2** zeigt ein weiteres Ausführungsbeispiel eines erfindungsgemäßen Druckbegrenzungsventils 10'.

Das Druckbegrenzungsventil 10' weist im Wesentlichen sämtliche strukturellen und funktionalen Merkmale des in Fig. 1 gezeigten und vorstehend beschriebenen Druckbegrenzungsventils 10 auf, mit Ausnahme jedoch der nachstehend beschriebenen Unterschiede.

Identische Elemente sind daher mit identischen Bezugszeichen bezeichnet.

Das in Fig. 2 gezeigte Druckbegrenzungsventils 10' weist jedoch die folgenden Unterschiede auf:
Anstelle des Stopfens 35 und der gesonderten Feder 46 ist ein Sicherheitsventilkörper 32' in Form einer Dichtplatte vorgesehen.

Der Sicherheitsventilkörper 32' ist direkt federbelastet durch die Druckbegrenzungseinstellfeder 28 und gegen den zweiten Kolbenring 22 eingestellt. Somit ist der Sicherheitsventilkörper 32' durch die Druckbegrenzungseinstellfeder 28 federbelastet.

Außerdem ist der Sicherheitsventilkörper 32' im Ventilgehäuse 12 geführt.

Der zweite Kolbenring 22 weist hier auch eine Führung 34' auf, in der ein umlaufender Führungsring 35' geführt ist.

Der Sicherheitsventilkörper 32' ist dabei derart gegen den zweiten Kolbenring 22 angestellt, dass er zugleich auch direkt gegen den Dichtring 42 anstellbar ist, um hierdurch den pneumatischen Durchgang 26 dichtend verschließen zu können.

In einer geschlossenen Stellung liegt somit der Sicherheitsventilkörper 32' dichtend am Dichtring 42 des zweiten Kolbenrings 22 an.

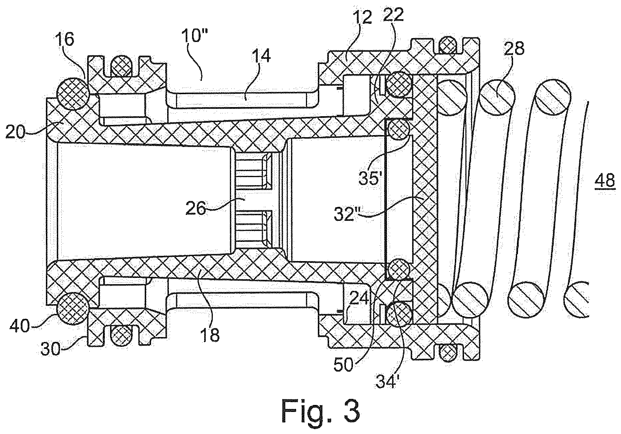

**Fig. 3** zeigt eine weitere Ausführungsform eines Druckbegrenzungsventils 10", das nahezu identisch mit dem in Fig. 2 gezeigten Ausführungsbeispiel des Druckbegrenzungsventils 10' ist.

Das Druckbegrenzungsventil 10" weist somit im Wesentlichen sämtliche strukturellen und funktionalen Merkmale des in Fig. 1 und Fig. 2 gezeigten und vorstehend beschriebenen Druckbegrenzungsventils 10 bzw. 10' auf, mit Ausnahme jedoch der nachstehend beschriebenen Unterschiede.

Hier ist zusätzlich am umlaufenden Führungsring 35' ein zusätzlicher Dichtring 50 vorgesehen, der den Sicherheitsventilkörper 32" gegen den zweiten Kolbenring 22 dichtet.

Grundsätzlich ist auch denkbar, dass der Dichtring 50 im zweiten Kolbenring 22 gehalten ist.

Der Dichtring 50 kann durch ein O-Ring oder durch ein aufvulkanisiertes Dichtelement ausgebildet sein.

### BEZUGSZEICHENLISTE

- 10: Druckbegrenzungsventil
- 10': Druckbegrenzungsventil
- 10": Druckbegrenzungsventil
- 12: Ventilgehäuse
- 14: Ventileinlass
- 16: Ventilauslass
- 18: Ventilkolben
- 20: erster Kolbenring
- 22: zweiter Kolbenring
- 24: Gehäuseansatz
- 26: pneumatischer Durchgang
- 28: Druckbegrenzungseinstellfeder
- 30: Anschlag
- 32: Sicherheitsventilkörper
- 32': Sicherheitsventilkörper
- 32": Sicherheitsventilkörper
- 34: Führung
- 34': Führung
- 35: Stopfen
- 35': umlaufender Führungsring
- 36: Durchlass
- 38: Ausnehmung
- 40: Dichtfläche
- 42: Dichtring
- 44: Sicherheitsventilkörperdichtfläche
- 46: Feder
- 48: Sicherheitsventilauslass
- 50: Dichtring

## Patentansprüche

1. Druckbegrenzungsventil (10; 10'; 10") mit einem Ventilgehäuse (12) und mit einem Ventilkolben (18) und mit einer Druckbegrenzungseinstellfeder (28), wobei im Ventilgehäuse (12) wenigstens ein Ventileinlass (14) und wenigstens ein Ventilauslass (16) vorgesehen ist, wobei der Ventilkolben (18) eine Öffnungsstellung, bei der der Ventileinlass (14) und der Ventilauslass (16) miteinander verbunden sind, und wenigstens eine Schließstellung, bei der der Ventileinlass (14) und der Ventilauslass (16) voneinander getrennt sind, einnehmen kann, wobei der Ventilkolben (18) einen ersten Kolbenring (20) mit einer Dichtfläche (40) und einen zweiten Kolbenring (22) aufweist, **dadurch gekennzeichnet, dass** der erste Kolbenring (20) eine geringe pneumatische Wirkfläche aufweist als der zweite Kolbenring (22) und wobei der Ventilkolben (18) zwischen dem ersten Kolbenring (20) und dem zweiten Kolbenring (22) einen im Wesentlichen kegelstumpfartigen Abschnitt aufweist, der sich zum ersten Kolbenring (20) hin verjüngt, wobei in der Schließstellung die Dichtfläche (40) des ersten Kolbenrings (20) gegen einen Gehäuseansatz (24) dichtend zugezogen ist durch eine pneumatische Kraft, die auf den ersten Kolbenring (20) und zweiten Kolbenring (22) wirkt und die entgegen der Kraft der Druckbegrenzungseinstellfeder (28) gerichtet ist, und wobei weiter im Ventilkolben (18) ein pneumatischer Durchgang (26) zur Ausbildung einer Sicherheitsventilfunktion vorhanden ist, der durch einen federbelasteten Sicherheitsventilkörper (32) verschließbar ist.

2. Druckbegrenzungsventil (10; 10'; 10") nach Anspruch 1,
**dadurch gekennzeichnet, dass**
die Druckbegrenzungseinstellfeder (28) auf der dem ersten Kolbenring (20) abgewandten Seite des zweiten Kolbenrings (22) gegen den zweiten Kolbenring (22) angestellt ist.

3. Druckbegrenzungsventil (10; 10'; 10") nach Anspruch 1 oder Anspruch 2,
**dadurch gekennzeichnet, dass**
lediglich ein Teil der Radialfläche des ersten Kolbenrings (20) im Ventilgehäuse (12) geführt ist.

4. Druckbegrenzungsventil (10; 10'; 10") nach einem der vorhergehenden Ansprüche,
**dadurch gekennzeichnet, dass**
die Dichtfläche (40) des ersten Kolbenringes (20) in der Radialfläche des ersten Kolbenringes (20) angeordnet ist.

5. Druckbegrenzungsventil (10; 10'; 10") nach einem der vorgehenden Ansprüche,
**dadurch gekennzeichnet, dass**
die Dichtfläche (40) des ersten Kolbenringes (20) durch einen O-Ring und/oder durch ein aufvulkanisiertes Dichtelement ausgebildet ist.

6. Druckbegrenzungsventil (10; 10'; 10") nach einem der vorgehenden Ansprüche,
**dadurch gekennzeichnet, dass**
der zweite Kolbenring (22) eine Radialfläche aufweist, die im Ventilgehäuse (12) geführt ist, wobei in der Radialfläche ein Dichtring (42) vorgesehen ist.

7. Druckbegrenzungsventil (10; 10'; 10") nach Anspruch 6,
**dadurch gekennzeichnet, dass**
der Dichtring (42) durch einen O-Ring und/oder durch ein aufvulkanisiertes Dichtelement ausgebildet ist.

8. Druckbegrenzungsventil (10'; 10") nach einem der vorgehenden Ansprüche,
**dadurch gekennzeichnet, dass**
der Sicherheitsventilkörper (32') durch die Druckbegrenzungseinstellfeder (28) federbelastet ist.

9. Druckbegrenzungsventil (10) nach einem der Ansprüche 6 bis 9,
**dadurch gekennzeichnet, dass**
der Sicherheitsventilkörper (32) in einer geschlossenen Stellung dichtend am Dichtring (42) des zweiten Kolbenrings (22) anliegt.

10. Druckbegrenzungsventil (10'; 10") nach einem der vorgehenden Ansprüche,
**dadurch gekennzeichnet, dass**
der Sicherheitsventilkörper (32') im Ventilgehäuse (12) geführt ist.

11. Druckbegrenzungsventil (10) nach einem der Ansprüche 1 bis 9,
**dadurch gekennzeichnet, dass**
der Sicherheitsventilkörper (32) im Inneren des Ventilkolbens (18) angeordnet ist.

12. Druckbegrenzungsventil (10) nach Anspruch 11,
**dadurch gekennzeichnet, dass**
der Sicherheitsventilkörper (32) einen Sicherheitsventilkörperdichtring aufweist, mittels dessen der pneumatische Durchgang (26) in einer geschlossenen Stellung des Sicherheitsventilkörpers (32) dichtend verschließbar ist.

13. Druckbegrenzungsventil (10) nach Anspruch 11 oder Anspruch 12,
**dadurch gekennzeichnet, dass**
der Sicherheitsventilkörper (32) eine gesonderte Sicherheitsventilkörperfeder (33) aufweist, die den Sicherheitsventilkörper (32) in einer geschlossenen Stellung des Sicherheitsventilkörpers (32) gegen den pneumatischen Durchgang (26) anstellt.

## Claims

1. A pressure-limiting valve (10; 10'; 10") comprising a valve housing (12) and a valve piston (18) and a pressure-limiting adjusting spring (28), at least one valve inlet (14) and at least one valve outlet (16) being provided in the valve housing (12), the valve piston (18) being able to assume an open position, in which the valve inlet (14) and the valve outlet (16) are connected to one another, and at least one closed position, in which the valve inlet (14) and the valve outlet (16) are separated from one another, the valve piston (18) having a first piston ring (20) with a sealing face (40) and a second piston ring (22), **characterised in that** the first piston ring (20) has a smaller pneumatic active surface than the second piston ring (22) and the valve piston (18) has between the first piston ring (20) and the second piston ring (22) a substantially truncated cone-like section that tapers towards the first piston ring (20), in the closed position the sealing face (40) of the first piston ring (20) being pulled so as to form a seal against a housing lip (24) by a pneumatic force that acts on the first piston ring (20) and second piston ring (22) and is directed against the force of the pressure-limiting adjusting spring (28) and, furthermore, there being provided in the valve piston (18) in order to create a safety valve function a pneumatic passage (26) that can be closed by a spring-loaded safety valve body (32).

2. A pressure-limiting valve (10; 10'; 10") according to claim 1,
**characterised in that**
the pressure-limiting adjusting spring (28) is set against the second piston ring (22) on the side of the second piston ring (22) facing away from the first piston ring (20).

3. A pressure-limiting valve (10; 10'; 10") according to claim 1 or claim 2,
**characterised in that**
only a portion of the radial face of the first piston ring (20) is guided in the valve housing (12).

4. A pressure-limiting valve (10; 10'; 10") according to one of the preceding claims,
**characterised in that**
the sealing face (40) of the first piston ring (20) is arranged in the radial face of the first piston ring (20).

5. A pressure-limiting valve (10; 10'; 10") according to one of the preceding claims,
**characterised in that**
the sealing face (40) of the first piston ring (20) takes the form of an O-ring and/or a vulcanised-on sealing element.

6. A pressure-limiting valve (10; 10'; 10") according to one of the preceding claims,
**characterised in that**
the second piston ring (22) has a radial face that is guided in the valve housing (12), a sealing ring (42) being provided in the radial face.

7. A pressure-limiting valve (10; 10'; 10") according to claim 6,
**characterised in that**
the sealing ring (42) takes the form of an O-ring and/or a vulcanised-on sealing element.

8. A pressure-limiting valve (10'; 10") according to one of the preceding claims,
**characterised in that**
the safety valve body (32') is spring-loaded by the pressure-limiting adjusting spring (28).

9. A pressure-limiting valve (10) according to one of claims 6 to 9,
**characterised in that**
in a closed position the safety valve body (32) bears against the sealing ring (42) of the second piston ring (22) so as to form a seal.

10. A pressure-limiting valve (10'; 10") according to one of the preceding claims,
**characterised in that**
the safety valve body (32') is guided in the valve housing (12).

11. A pressure-limiting valve (10) according to one of claims 1 to 9,
**characterised in that**
the safety valve body (32) is arranged in the interior of the valve piston (18).

12. A pressure-limiting valve (10) according to claim 11,
**characterised in that**
the safety valve body (32) has a safety valve body sealing ring by means of which the pneumatic passage (26) can be closed so as to form a seal in a closed position of the safety valve body (32).

13. A pressure-limiting valve (10) according to claim 11 or claim 12,
**characterised in that**
the safety valve body (32) has a separate safety valve body spring (33) that sets the safety valve body (32) against the pneumatic passage (26) in a closed position of the safety valve body (32).

## Revendications

1. Soupape (10; 10'; 10'') de limitation de la pression comprenant un corps (2) de soupape et comprenant un piston (18) de soupape et comprenant un ressort (28) de réglage de la limitation de la pression, dans laquelle il est prévu dans le corps (12) de la soupape au moins une entrée (14) de la soupape et au moins une sortie (16) de la soupape, le piston (18) de la soupape pouvant prendre une position d'ouverture dans laquelle l'entrée (14) de la soupape et la sortie (18) de la soupape communiquent entre elles, et au moins une position de fermeture dans laquelle l'entrée (14) de la soupape et la sortie (16) de la soupape sont séparées l'une de l'autre, le piston (18) de la soupape ayant une première bague (20) de piston ayant une surface (40) d'étanchéité et une deuxième bague (22) de piston,
**caractérisée en ce que** la première bague (20) de piston a une surface active pneumatique plus petite que la deuxième bague (22) de piston, et dans laquelle le piston (18) de la soupape a, entre la première bague (20) de piston et la deuxième bague (22) de piston, un tronçon sensiblement de type en tronc de cône qui se rétrécit vers la première bague (20) de piston, dans laquelle, dans la position de fermeture, la surface (40) d'étanchéité de la première bague (20) de piston est tirée avec étanchéité sur un appendice (24) du corps par une force pneumatique qui s'applique à la première bague (20) du piston et la deuxième bague (22) du piston et qui est dirigée dans le sens contraire à la force du ressort (28) de réglage de la limitation de la pression, et dans laquelle en outre, il y a dans le piston (18) de la soupape, un passage (26) pneumatique pour constituer une fonction de soupape de sécurité, qui peut être fermée par un obturateur (32) de sécurité soumis à l'action d'un ressort.

2. Soupape (10; 10'; 10'') de limitation de la pression suivant la revendication 1,
**caractérisée en ce que**
le ressort (28) de réglage de la limitation de la pression est du côté, loin de la première bague (20) du piston, de la deuxième bague (22) du piston, appliquée sur la deuxième bague (22) du piston.

3. Soupape (10; 10'; 10'') de limitation de la pression suivant la revendication 1 ou la revendication 2,
**caractérisée en ce que**
seule une partie de la surface radiale de la première bague (20) du piston est guidée dans le corps (12) de la soupape.

4. Soupape (10; 10'; 10'') de limitation de la pression suivant l'une des revendications précédentes,
**caractérisée en ce que**
la surface (40) d'étanchéité de la première bague (20) du piston est disposée dans la surface radiale de la première bague (20) du piston.

5. Soupape (10; 10'; 10'') de limitation de la pression suivant l'une des revendications précédentes,
**caractérisée en ce que**
la surface (40) d'étanchéité de la première bague (20) du piston est constituée par un joint torique et/ou par un élément d'étanchéité appliqué par une vulcanisation.

6. Soupape (10; 10'; 10'') de limitation de la pression suivant l'une des revendications précédentes,
**caractérisée en ce que**
la deuxième bague (22) du piston a une surface radiale qui est guidée dans le corps (12) de la soupape, un joint (42) étant prévu dans la surface radiale.

7. Soupape (10; 10'; 10'') de limitation de la pression suivant la revendication 6,
**caractérisée en ce que**
le joint (42) est constitué par un joint torique et/ou par un élément d'étanchéité appliqué par vulcanisation

8. Soupape (10'; 10'') de limitation de la pression suivant l'une des revendications précédentes,
**caractérisée en ce que**
l'obturateur (32') de sécurité est soumis à l'action du ressort (28) de réglage de la limitation de la pression.

9. Soupape (10) de limitation de la pression suivant l'une des revendications 6 à 9,
**caractérisée en ce que**
l'obturateur (32) de sécurité s'applique en une position fermée avec étanchéité au joint (42) de la deuxième bague (22) du piston

10. Soupape (10'; 10'') de limitation de la pression suivant l'une des revendications précédentes,
**caractérisée en ce que**
l'obturateur (32') de sécurité est guidé dans le corps (12) de la soupape.

11. Soupape (10) de limitation de la pression suivant l'une des revendications 1 à 9,
**caractérisée en ce que**
l'obturateur (32) de sécurité est disposé à l'intérieur du piston (18) de la soupape.

12. Soupape (10) de limitation de la pression suivant la revendication 11,
**caractérisée en ce que**
l'obturateur (32) de sécurité a un joint, au moyen duquel le passage (26) pneumatique peut, dans une position fermée de l'obturateur (32) de sécurité, être fermé avec étanchéité.

13. Soupape (10) suivant la revendication 11 ou la revendication 12,
**caractérisée en ce que**
l'obturateur (32) de sécurité a un ressort (33) particulier qui applique l'obturateur (32) de sécurité, en une position fermée de l'obturateur (32) de sécurité, au passage (26) pneumatique.
